# EUROPEAN PATENT SPECIFICATION

(11) **EP 4 453 525 B1**
(45) Date of publication and mention of the grant of the patent: **20.05.2026**
(21) Application number: 22856904.2
(22) Date of filing: 22.12.2022
(51) Int. Cl.: G01L 1/22, G01L 1/26, G01L 5/22

(54) **FORCE SENSOR APPARATUS FOR ELECTROMECHANICAL BRAKE**
KRAFTSENSORVORRICHTUNG FÜR ELEKTROMECHANISCHE BREMSE
APPAREIL CAPTEUR DE FORCE POUR FREIN ÉLECTROMÉCANIQUE

(30) Priority: 22.12.2021 US 202163292659 P
(43) Date of publication of application: 30.10.2024
(73) Proprietor: Sensata Technologies, Inc., Attleboro, MA 02703 (US)
(72) Inventor: JACOBS, Frank H., ATTLEBORO, Massachusetts 02703 (US); GOEDEGEBUURE, Bart, ATTLEBORO, Massachusetts 02703 (US); SLOETJES, Jan-willem, ATTLEBORO, Massachusetts 02703 (US)
(74) Representative: Gulde & Partner
(86) International application number: PCT/US2022/053871
(87) International publication number: WO 2023/122304

(56) References cited:
- EP-A2- 1 953 514
- DE-A1- 102006 025 509
- US-A1- 2005 140 205
- US-A1- 2018 087 980
- US-A1- 2021 223 120

## Description

### BACKGROUND

Force sensors are often used to control or regulate a force that is applied to a component. In one type of force sensor, the force sensor is positioned in such a way that forces to be measured act on the sensor. The force sensor may be configured to transform a measurement of forces into an electrical signal for further use in the control or regulation of the forces. This type of force sensor may be used in a variety of applications, such as for measuring braking force of electromechanical brakes in automobiles. For example, a force- compliant element of the force sensor may be coupled to some component of the braking system and as forces are applied, the force-compliant element temporarily deforms. In this example, the strain on the force-compliant element may be measured and used to generate an electrical signal that is indicative of the forces acting on the component of the braking system.

US 2021/223120 A1 discloses a force sensor apparatus including at least a force-compliant element that deforms in response to forces applied to the force sensor apparatus, and a sensing element coupled to the force-compliant element. The force sensor apparatus is configured to generate a signal indicating the degree that the force-compliant element deforms in response to the applications of forces to the force sensor apparatus.

US 2018/087980 A1 discloses a sensor such as a load cell including a metal body containing the sensor electronics and flexure elements. Power is brought into the electronics and signals are taken out via header pins arranged in any of various groupings so as to extend through holes in the body. The pins are fixed by means of fused glass or ceramic material and the body is sealed to tolerate harsh environmental conditions.

EP 1 953 514 A2 discloses a force sensor including a force sensor chip and a shock absorbing device that has a damping mechanism. The damping mechanism is disc-shaped and has an annular groove formed in at least a front surface so as to dampen external force. The damping force is adjusted by varying the depth of the groove.

US 2005/140205 A1 discloses a force sensor for an electromechanical brake. The force sensor comprises a closed ring having a C-shaped profile that is open inward. Force is introduced along the inner circumference of the ring.

### SUMMARY

The claimed invention is defined in the independent claims and preferred embodiments are defined in the dependent claims In a particular embodiment, a force sensor apparatus is disclosed that includes a force- compliant element that deforms in response to applications of forces to the force sensor apparatus. The force sensor apparatus also includes a sensing element coupled to an upper region of the force-compliant element and configured to generate one or more signals indicating an amount that the force-compliant element deforms in response to the application of forces to the force sensor apparatus. The force-compliant element has a bottom region that includes a force-receiving surface and an outer region surrounding the force-receiving surface. In this example embodiment, the outer region is substantially level. In a particular embodiment, the outer region is absent any grooves. Alternatively, the outer region may have one or more small grooves.

In another embodiment, a method of assembling a force sensor apparatus is disclosed that includes attaching a printed circuit board (PCB) having electrical components to a support structure. The method also includes electrically coupling the electrical components of the PCB to a sensing element on a force-compliant element that deforms in response to applications of forces to the force sensor apparatus. The sensing element is configured to generate one or more signals indicating an amount that the force-compliant element deforms in response to the application of forces to the force sensor apparatus. The force-compliant element has a bottom region that includes a force-receiving surface and an outer region surrounding the force-receiving surface. In this example embodiment, the outer region is substantially level. According to the claimed invention, the outer region is absent any grooves. The method also includes attaching the support structure to the force-compliant element. In addition, the method also includes positioning a sensor cap over the PCB, the support structure, and the force-compliant element. In this example embodiment, the method also includes attaching the sensor cap to the force-compliant element.

The foregoing and other objects, features and advantages of the invention will be apparent from the following more particular descriptions of exemplary embodiments of the invention as illustrated in the accompanying drawings wherein like reference numbers generally represent like parts of exemplary embodiments of the invention.

### BRIEF DESCRIPTION OF THE DRAWINGS

FIG. 1 is a diagram illustrating an exploded view of a force sensor apparatus according to embodiments of the present disclosure;
FIG. 2 is a diagram illustrating an isometric view of the force sensor apparatus of FIG. 1 after assembly;
FIG. 3 is a diagram illustrating a partial cross-section view of the force sensor apparatus of FIG. 1 after assembly;
FIG. 4 is a diagram illustrating a top view of the force sensor apparatus of FIG. 1 after assembly;
FIG. 5A is a diagram illustrating a side view of the force sensor apparatus of FIG. 1 after assembly;
FIG. 5B is a diagram illustrating a side view of the force sensor apparatus of FIG. 1 after assembly;
FIG. 6 is a diagram illustrating a cross-section view of a force sensor apparatus of FIG. 1;
FIG. 7 is a diagram illustrating an isometric view of the force-compliant element of FIG. 1;
FIG. 8 is a flowchart to illustrate an implementation of a method for assembling a force sensor apparatus according to embodiments of the present disclosure;
FIG. 9 is a flowchart to illustrate another implementation of a method for assembling a force sensor apparatus according to embodiments of the present disclosure; and
FIG. 10 is a flowchart to illustrate another implementation of a method for assembling a force sensor apparatus according to embodiments of the present disclosure.

### DETAILED DESCRIPTION

The advantages, and other features of the systems and methods disclosed herein, will become more readily apparent to those having ordinary skill in the art from the following detailed description of certain embodiments taken in conjunction with the drawings which set forth representative embodiments of the present invention.

In the description, common features are designated by common reference numbers throughout the drawings. As used herein, various terminology is used for the purpose of describing particular implementations only and is not intended to be limiting. For example, the singular forms "a," "an," and "the" are intended to include the plural forms as well, unless the context clearly indicates otherwise. It may be further understood that the terms "comprise," "comprises," and "comprising" may be used interchangeably with "include," "includes," or "including." Additionally, it will be understood that the term "wherein" may be used interchangeably with "where." As used herein, "exemplary" may indicate an example, an implementation, and/or an aspect, and should not be construed as limiting or as indicating a preference or a preferred implementation. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements. As used herein, "coupled" may include "communicatively coupled," "electrically coupled," or "physically coupled," and may also (or alternatively) include any combinations thereof. Two devices (or components) may be coupled (e.g., communicatively coupled, electrically coupled, or physically coupled) directly or indirectly via one or more other devices, components, wires, etc. Two devices (or components) that are electrically coupled may be included in the same device or in different devices and may be connected via electronics, one or more connectors, or inductive coupling, as illustrative, non-limiting examples. In some implementations, two devices (or components) that are communicatively coupled, such as in electrical communication, may send and receive electrical signals (digital signals or analog signals) directly or indirectly, such as via one or more wires, buses, networks, etc. As used herein, "directly coupled" may include two devices that are coupled (e.g., communicatively coupled, electrically coupled, or physically coupled) without intervening components.

Further, words defining orientation such as "upper", "bottom", "lower", "inner", and "outer" are merely used to help describe the location of components with respect to one another. For example, an "inner" surface of a part is merely meant to describe a surface that is separate from the "outer" surface of that same part. No words denoting orientation are used to describe an absolute orientation (i.e., where an "inner" part must always be inside a part).

Note that techniques herein are well suited for use in any type of sensor application such as force sensor assemblies as discussed herein. However, it should be noted that embodiments herein are not limited to use in such applications and that the techniques discussed herein are well suited for other applications as well.

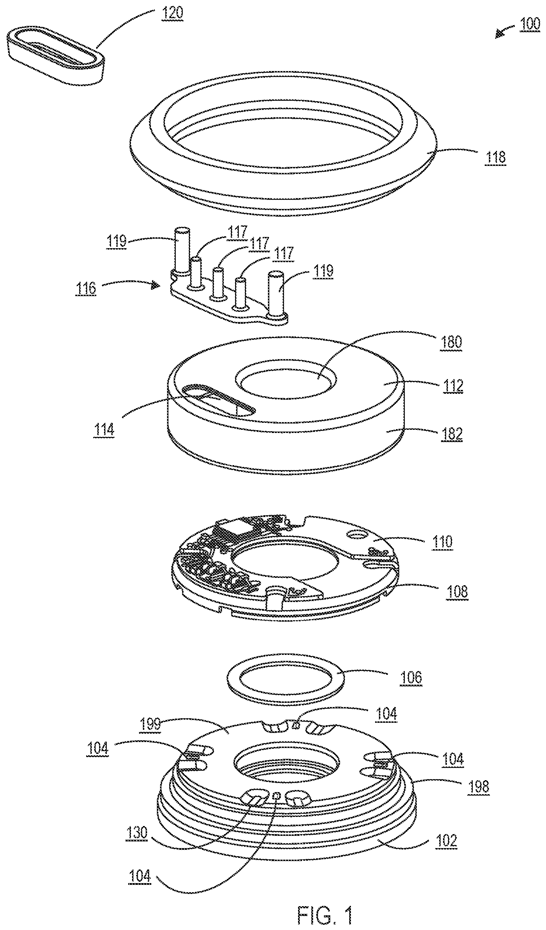

For further explanation, FIG. 1 sets forth a diagram illustrating an exploded view of a force sensor apparatus (100) according to embodiments of the present disclosure. The apparatus (100) of FIG. 1 includes a force-compliant element (102) configured to deform in response to forces applied to the force sensor apparatus. In a particular embodiment, the force-compliant element (102) has a first surface arranged to receive a first force. As will be explained below, the force-compliant element is connected with an interface structure (118) that is arranged to receive a second force opposite in direction to the first force, such that the force-compliant element deforms in response to the application of the first force and the second force on the force sensor apparatus (100). In a particular embodiment, the force-compliant element (102) is a piece of material, such as metal, that deforms in response to applications of forces. For example, the force-compliant element (102) may be a ring-shaped metal disk. Readers of skill in the art will realize that the force-compliant element (102) may be produced using a variety of methods and techniques including but not limited to turned and milled and metal injection molding.

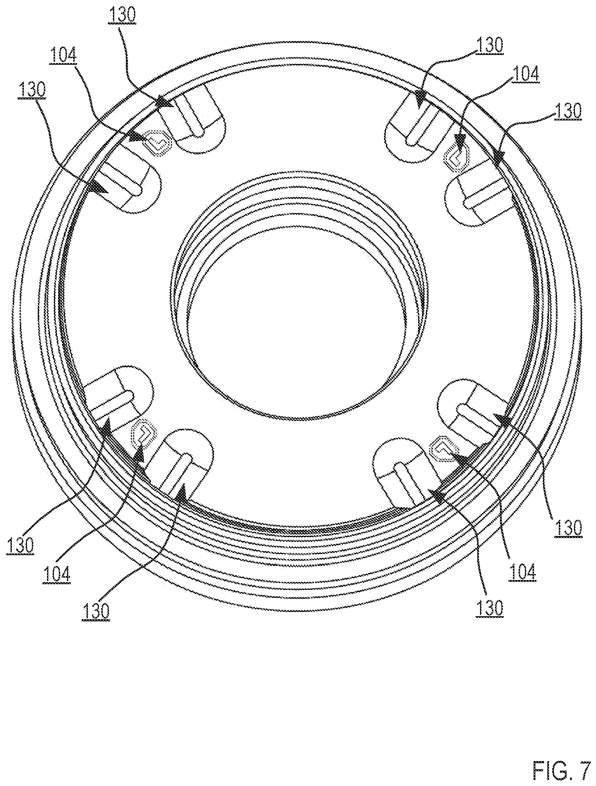

The apparatus (100) of FIG. 1 also includes four sensing elements (104) coupled to an upper region (top surface) (199) of the force-compliant element (102). In a particular embodiment, the upper region (top surface) of the force-compliant element (102) is prepared to provide a good attachment surface for the sensing elements (104). For example, the top surface of the force-compliant element (102) may be sand-blasted. Each of the sensing elements (104) is configured to generate a signal indicating the degree (amount) that the force-compliant element (102) deforms in response to the application of forces on the apparatus (100). In a particular embodiment, the sensing elements are semiconductor strain gauges (e.g., micro-strain gauges (MSG)) that are in a "L" shape. FIG. 7 sets forth a diagram illustrating an isometric view of the force-compliant element (102) of FIG. 1 in which the "L" shaped gauges are visible. An "L" shaped strain gauge includes one leg measuring in a radial direction and one leg measuring in tangential direction. Strains in a tangential direction may be higher compared to strains in a radial direction. Therefore, an "L" shaped strain gauge that measures both radial and tangential strains may be more sensitive than a strain gauge that only measures in the radial direction. A high sensitivity may enable more flexibility to make the deflectable sensing element more rigid to reduce stresses.

In order to measure the amount of force applied to the force-compliant element, the sensing elements may be evenly distributed on a circle on an upper region of the force-compliant element (102). Readers of skill in the art will realize that any number of sensing elements may be used in accordance with the present disclosure (including a particular embodiment in which a single gauge is used as the sensing element). The force-compliant element may include one or more grooves to help control the strain field which the sense element measures. In the example of FIG. 1, the force-compliant element (102) includes a plurality of grooves (130) on the upper region of the force-compliant element. Alternatively, the force-compliant element may include no grooves in the upper region.

In addition, the apparatus (100) of FIG. 1 also includes a printed circuit board (PCB) (110) on which electrical components (e.g., integrated circuits, and passive elements such as resistors, capacitors, etc.) are positioned and configured to receive the signal from the sensing elements (104). In the example of FIG. 1, the PCB is C-shaped and only covers a portion of the underlying support structure (108). Having a C-shaped PCB may allow the PCB to be nested within one panel with PCB's.

In the force sensor apparatus (100) of FIG. 1, the support structure (108) has a surface on which the PCB (110) is coupled. The support structure may be made of many types of material, such as metal and plastic, that is suitable for supporting the PCB (110). In the example of FIG. 1, the support structure (108) are positioned in a stack of the components of the force sensor apparatus (100) to rest on the force-compliant element (102). The support structure (108) may also include openings (not pictured) through which the components of the PCB may be coupled to the sensing elements. In this example, the openings in the support structure (108) may align with positions of bonding pads on the PCB (110), so that the contacts on the sensing elements (104) may be bonded to the bonding pads on the PCB (110). After forming this electrical connection of the sensing elements (104) to the electrical components on the PCB (110), the sensing elements (104) may be covered with a protective material (e.g., a gel like material) in the voids provided by the openings in the support structure (108).

In addition, the apparatus (100) of FIG. 1 also includes a sensor housing (112) that covers the PCB (110). In the example of FIG. 1, the sensor housing (112) has an inner rim (180) and an outer rim (182). As will be explained in further detail below, the sensor housing (112) is designed to protect the electrical components of the force sensor apparatus (100). The apparatus (100) of FIG. 1 also includes an environmental seal ring (106), which when placed between the sensor housing (112) and the force-compliant element (102), ensures that the internal components of the force sensor apparatus (100) are protected. In the example of FIG. 1, the environmental seal ring is an O-ring, but readers of the skill in the art will realize that a number of other shapes and configurations, such as D-rings and potting compounds, may be used to provide a seal from the environment. Using an environmental seal may allow the sensor housing to be assembled and sealed to the force-compliant element without having to weld or otherwise couple the inner rim of the sensor housing to the force-compliant element. Sealing the sensor housing (112) and the force-compliant element (102) with an environmental seal (106) instead of welding the inner rims of the sensor housing (112) and the force-compliant element (102) together may reduce the complexity and cost of assembling the apparatus (100).

The apparatus (100) of FIG. 1 also includes an electrical connector assembly (116) that is aligned for positioning within an opening (114) of the sensor housing (112). In the example of FIG. 1, the electrical connector assembly (116) includes a plurality of electrical connection pins (117) for transmitting a signal to an external component (not pictured). The electrical connector assembly (116) also includes a plurality of mechanical orientation features (119) for aligning the apparatus with an external component (not pictured). In a particular embodiment, the mechanical orientation features are part of the sensor housing (112). In another embodiment, the mechanical orientation features are part of the force-compliant element (102).

In a particular embodiment, the electrical connector assembly (116) is mechanically connected and environmentally sealed to the sensor housing (112). For example, a weld may be used to environmentally seal the electrical connector assembly (116) to the sensor housing (112). In the example of FIG. 1, the apparatus (100) includes a gasket (120) for sealing the electrical connector assembly (116) to a counterpart component. Using a glass seal and a gasket may allow the electrical connector assembly (116) to be environmentally sealed with the counterpart component without using additional seals.

In addition, the apparatus (100) of FIG. 1 includes an interface structure (118) that distributes a load to the force-compliant element (102) when the interface structure (118) is attached to the force-compliant element (102). In the example of FIG. 1, the interface structure (118) is a ring or interface ring that when coupled to the force-compliant element (102), evenly distributes the load to the force-compliant element (102), so that the sensing elements (104) can accurately measure the load on the force-compliant element. The interface structure (118) may also be used to create an interface for coupling the force sensor apparatus (100) to a component that provides a force to the force-compliant element (102). For example, the interface structure (118) may be used to fix the apparatus (100) to a caliper of an electromechanical braking system. In this example, the force-compliant element (102) may be coupled to a piston of the electromechanical braking system. Continuing with this example, forces from both the piston and the caliper are applied to the components of the apparatus (100) including the force-compliant element. As explained above, the applications of these forces may result in the force-compliant element (102) temporarily deforming. In this example, the sensing element (104) may generate an electrical signal having properties that are commensurate with the amount of deformation in the force-compliant element (102).

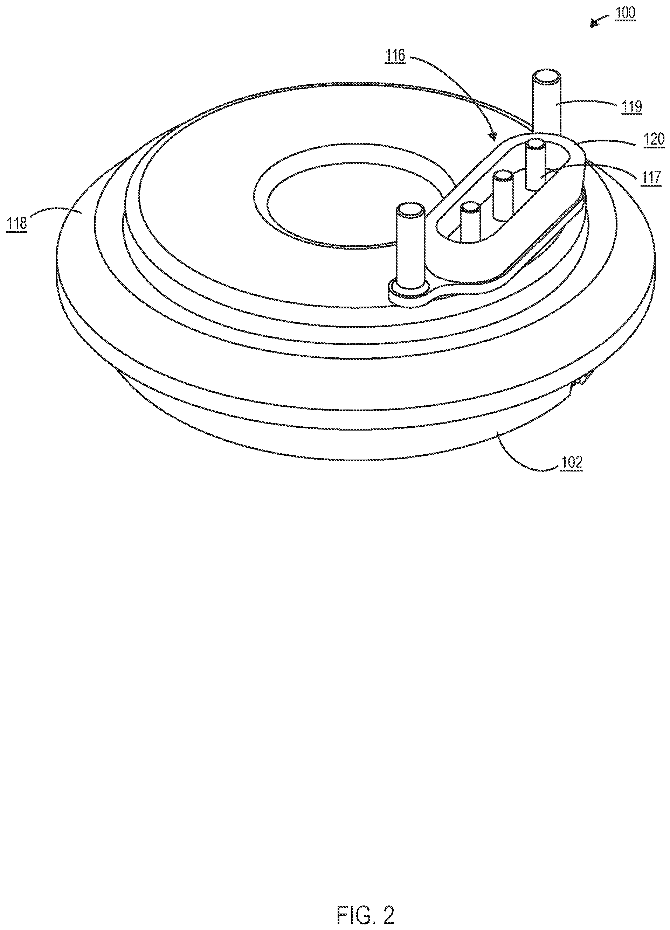

For further explanation, FIG. 2 sets forth a diagram illustrating an isometric view of the force sensor apparatus of FIG. 1 after assembly. In the assembled state, the force-compliant element (102) is visible, as well as the sensor housing (112), the interface structure (118), the electrical connector assembly (116), the mechanical orientation features (119), and the gasket (120).

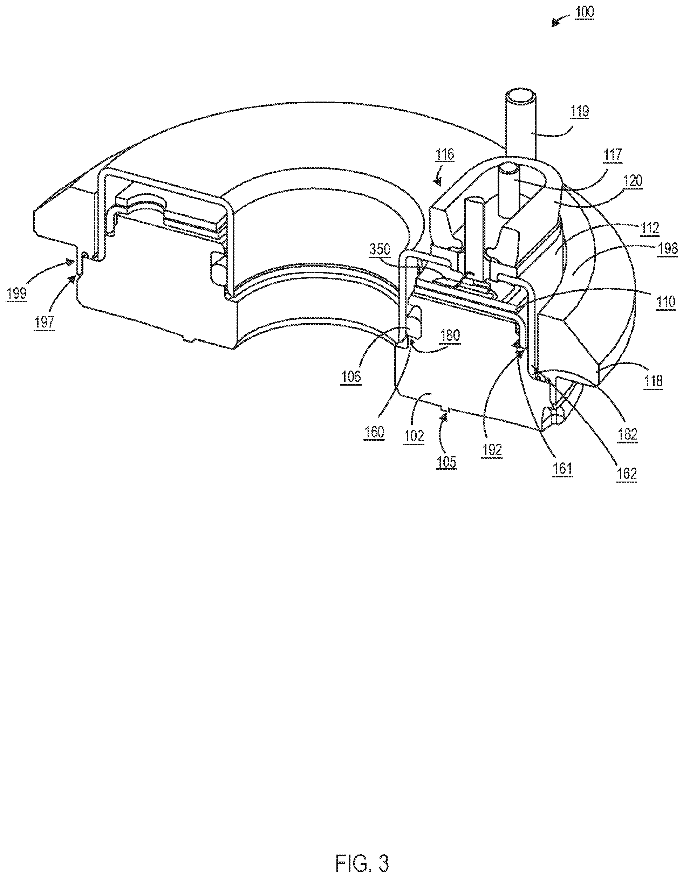

For further explanation, FIG. 3 sets forth a diagram illustrating a partial cross-section view of the force sensor apparatus of FIG. 1 after assembly. Assembling the force sensor apparatus (100) may include attaching the printed circuit board (PCB) (110) to the support structure (108). For example, the PCB (110) may be attached to the support structure using soldering, glue, adhesive, or tape. Assembling the force sensor apparatus may also include electrically coupling the electrical components of the PCB to the sensing elements (104) on the force measuring element (102). As explained above, the sensing elements (104) may be configured to measure a force applied to the force-compliant element (102) and generate an electrical signal. This electrical signal may then be transmitted from the sensing elements (104) to the PCB (110).

To assemble the force sensor apparatus, the outer rim (192) of the support structure (108) may be attached to the outer rim (161) of the force-compliant element (102). In the example of FIG. 3, the housing (112) is positioned over the PCB (110) and the support structure (108), and an outer rim (182) of the housing (112) is attached to another outer rim (162) of the force-compliant element (102).

Assembling the force sensor apparatus (100) may also include placing the environmental seal (106) between an inner rim (180) of the housing (112) and an inner rim (160) of the force-compliant element (102); and coupling the sensor housing (112) to the force-compliant element (102). In a particular embodiment, the sensor housing (112) is coupled to the force-compliant element (102) by one of welding, press-fitting, or with an adhesive. Using an environmental seal (106) to seal the inner rim of the sensor housing (112) and the inner rim of the force-compliant element (102), may allow the force sensor apparatus (100) to be assembled without welding or otherwise connecting the inner rims of the force-compliant element (102) and the sensor housing (112). As explained above, sealing the sensor housing (112) and the force-compliant element (102) with an environmental seal (106) instead of welding the inner rims of the sensor housing (112) and the force-compliant element (102) together may reduce the complexity and cost of assembling the apparatus (100).

The electrical pins (117) are coupled to the electrical components of the PCB (110). In the example of FIG. 3, a lead (350) electrically couples an electrical component of the PCB to one of the pins (117) of the electrical connector assembly (116). The electrical connector assembly (116) extends through an opening (e.g., the opening (114) shown in FIG. 1) of the sensor housing (112) such that the pins (117) and the orientation features (119) of the electrical connector assembly (116) are accessible to an outside component (not shown).

Furthermore, assembling the force sensor apparatus may include attaching the interface structure (118) to the force-compliant element (102). In the example of FIG. 3, the inner rim (199) of the interface structure (118) is welded to an outer rim (197) of the force-compliant element (102). As explained above, the interface structure enables an even distribution of force to the force-compliant elements. In the example of FIG. 3 the interface structure (118) includes a force-receiving surface (198) for receiving a force from the component. Because the interface structure (118) is coupled to the force-compliant element (102), the force received at the force-receiving surface (198) is applied to the force-compliant element (102) and is a counter force to the force that the force-compliant element (102) receives at a force-receiving surface (105) on the force-compliant element (102).

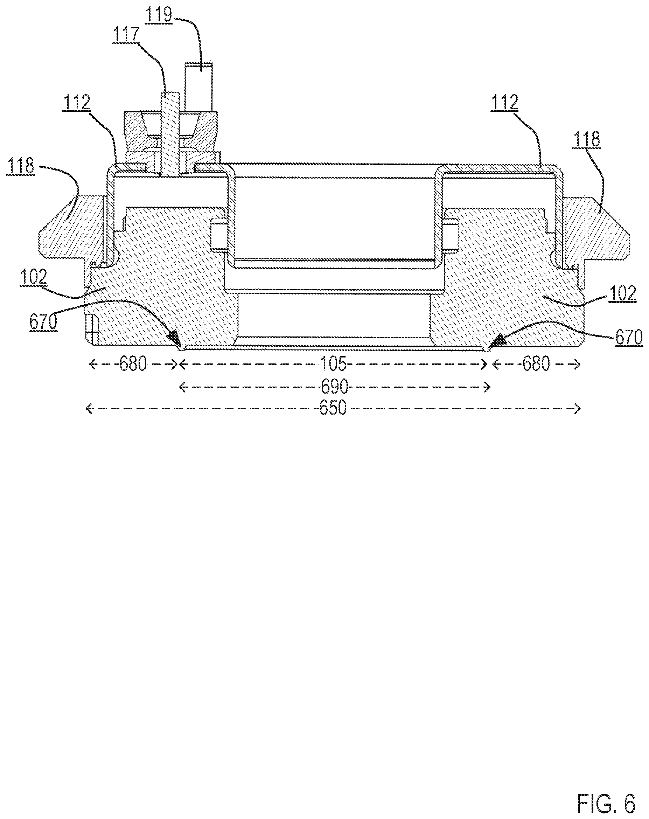

As will be further explained in FIG. 6, a circular force interface diameter (690) of the force-compliant element is the diameter of the circular force interface (670) at the force-receiving surface (105). Readers of skill in the art will notice that the force-compliant element (102) of FIG. 3 and the force-compliant element of FIG. 6 do not include a groove at an outer region (680) of a bottom region (650) of the force-compliant element (102). The absence of a groove at the outer region (680) will increase stiffness of the force-compliant element (102) and therefore the sensitivity of the force-compliant element (102) will go down. With standard semiconductor strain gauges, the sensitivity may be too low, however, with "L" shaped strain gauges (e.g., gauges (104) of FIG. 1), the sensitivity is still acceptable for many applications that require high sensitivity (e.g., an electromechanical brake (EMB) application that measures a front caliper or a rear caliper). Furthermore, without a groove at the outer region (680), the force-compliant element (102) is modular in that the circular force interface diameter (690) of the force-compliant element (102) is flexible to be able to optimize the design for different applications/force ranges. In a not claimed alternative, the outer region (680) may include a small groove that stills allows the circular force interface diameter (690) of the force-compliant element (102) to be flexible and therefore applicable to different applications/force ranges. That is, the outer region (680) is substantially level or flat such that the outer region is absent any grooves into the force-compliant element or has a small groove that is of a significantly reduced size in comparison to larger grooves used in prior art designs. Reducing the circular force interface diameter will make the force-compliant element more suitable for lower forces and increasing the circular force interface diameter will make the force-compliant element more suitable for higher forces.

The interface structure (also referred to as a reaction ring or an interface ring) also enables an application specific attachment to a component. For example, the interface structure may be used to fix the apparatus to a caliper of an electromechanical braking system. In this example, the force-compliant element (102) may be coupled to a piston of the electromechanical braking system. Continuing with this example, forces from both the piston and the caliper are applied to the components of the apparatus including the force-compliant element. Specifically, as the piston moves relative to the caliper, a first force is applied to the force-compliant element (102) at the circular force interface (670). The caliper provides a second force counter to the first force on the circular force interface (670). As explained above, the applications of these forces may result in the force-compliant element temporarily deforming. In this example, the sensing element (104) may generate an electrical signal having properties that are commensurate with the amount of deformation in the force-compliant element. This signal may be provided to the PCB, which process the signal and generates an output that may be transmitted to another component (not pictured) via the pins (117) of the electrical connector assembly (116).

In a particular embodiment, the force-sensor apparatus is used for an electromechanical brake (EMB) application. In one embodiment, the force-sensor apparatus is used to measure the brake force on a front caliper. This may require a force sensor with typically higher force requirements (than measuring the force on a rear caliper (e.g., 2x operating range compared to the rear caliper)). In a particular embodiment, the force-sensor apparatus is a modular sensor design which is suitable for the front and rear calipers.

As explained above, the force-compliant may be a modular sensor design because of one or more of the following features:
- "L" shaped gauges in the sensing element to boost sensitivity;
- Absence of a groove or inclusion of a reduced sized groove in the force-compliant element to reduce stresses and make the force-compliant element flexible for different circular force interface diameters; and
- Flexible bearing diameter to be able to optimize the design for different applications/force ranges.

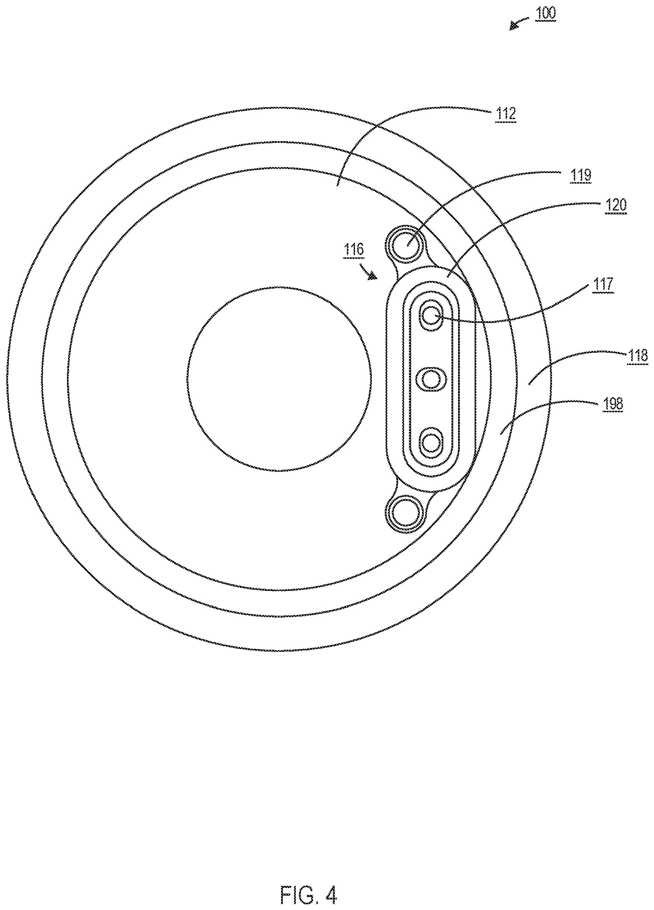

For further explanation, FIG. 4 sets forth a diagram illustrating a top view of the force sensor apparatus of FIG. 1 after assembly. From the top view of the force sensor apparatus, the mechanical orientation features (119), the pins (117) of the electrical connector assembly (116), the gasket (120), the interface structure (118), and the housing (112) are visible.

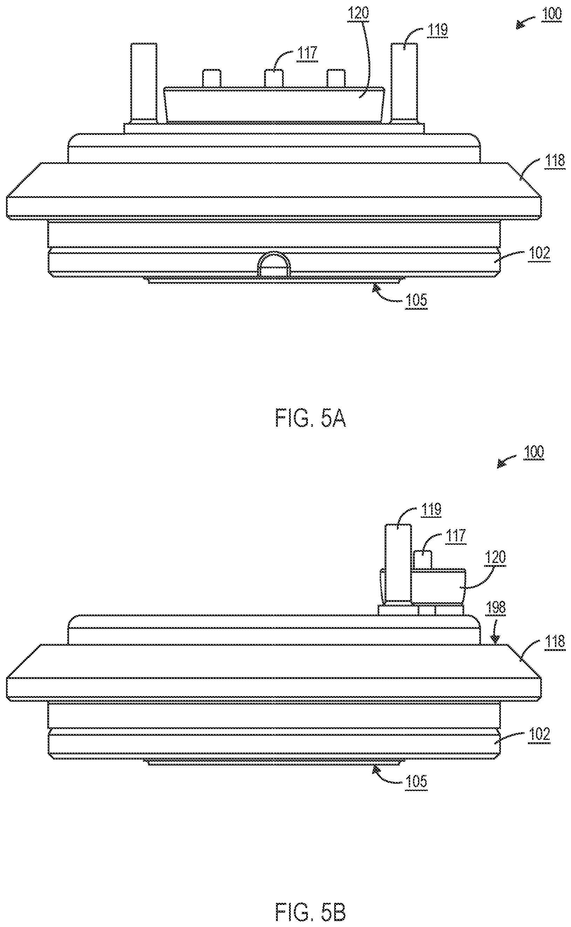

FIG. 5A and FIG. 5B set forth diagrams each illustrating a side view of the force sensor apparatus of FIG. 1 after assembly. From the side view of the force sensor apparatus, the mechanical orientation features (119), the pins (117) of the electrical connector assembly (116), the gasket (120), the interface structure (118), and the housing (112) are visible. The force-receiving surface (105) of the force-compliant element (102) is also visible.

For further explanation, FIG. 6 sets forth a diagram illustrating a cross-section view of force sensor apparatus of FIG. 1. The apparatus of FIG. 6 includes the following features that are also present in the apparatus of FIG. 1: "L" shaped gauges in the sensing element to boost sensitivity; absence in outer region (680) of groove or inclusion of a reduced sized groove to reduce stresses and make the force-compliant element flexible for different circular force interface diameters (690); and the flexible circular force interface diameter (690) to be able to optimize the design for different applications/force ranges.

By smartly connecting the above features (the L-gauges, absence of groove in outer region, and the flexible circular force interface diameter), the design of the force sensor apparatus may be optimized to meet the requirements of an EMB application for measuring force at both a front caliper and a rear caliper. To keep the stresses low enough, the height of the force sensor may be increased over previous designs (e.g., by 2mm), but the overall sensitivity is still acceptable.

In a particular embodiment, the force sensor apparatus has an acceptable sensitivity for 25kN and 50kN or even higher or lower. For lower force ranges, the circular force interface diameter may be reduced to increase the sensitivity. For higher force ranges the circular force interface diameter may be increased to reduce the stresses and still have an acceptable sensitivity. Therefore, this design may be suitable for a wide range of applications. The interface structure (118) may be adjusted for optimal integration. In a particular embodiment, by not changing the interface diameter with the SEA, the sensitivity of the complete force sensor apparatus may not change.

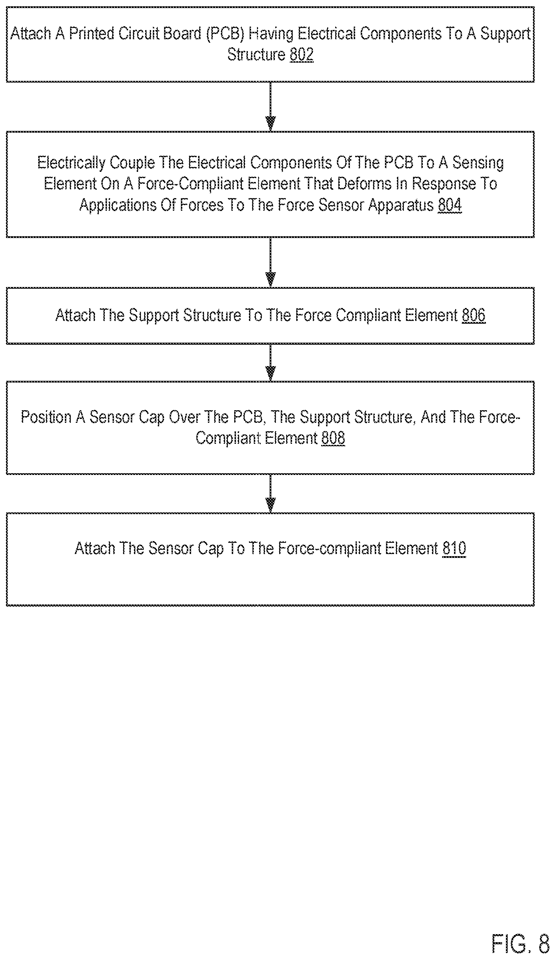

For further explanation, FIG. 8 sets forth a flowchart to illustrate an implementation of a method of assembling a force sensor apparatus according to embodiments of the present disclosure. The method of FIG. 8 includes attaching (802) a printed circuit board (PCB) having electrical components to a support structure. Attaching (802) a printed circuit board (PCB) having electrical components to a support structure may be carried out by soldering or applying an adhesive, tape, or glue to the bottom of a PCB (e.g., the PCB (110) of FIG. 1) to the support structure (e.g., the support structure (108) of FIG. 1).

The method of FIG. 8 also includes electrically coupling (804) the electrical components of the PCB to a sensing element on a force-compliant element. Electrically coupling (804) the electrical components of the PCB to the sensing element may be carried out by connecting an electrical connection (e.g., a wirebond) from the PCB (e.g., the PCB (110) of FIG. 1) to the sensing element (e.g., the sensing elements (104) of FIG. 1) on the force-compliant element (e.g., the force-compliant element (102) of FIG. 1).

The method of FIG. 8 also includes attaching (806) the support structure to the force-compliant element. Attaching (806) the support ring to the force-compliant element may be carried out by welding, gluing, or otherwise coupling the force-compliant element (e.g., the force-compliant element (102) of FIG. 1) and the support structure (e.g., the support structure (108) of FIG. 1).

In addition, the method of FIG. 8 also includes positioning (808) a sensor cap over the PCB, the support structure, and the force-compliant element. Positioning (808) a sensor cap over the PCB, the support structure, and the force-compliant element may be carried out by placing the sensor cap (e.g., the sensor housing (112) of FIG. 1) above the PCB (e.g., the PCB (110) of FIG. 1, the support structure (e.g., the support structure (108) of FIG. 1), and the force-compliant element (e.g., the force-compliant element (102) of FIG. 1).

Furthermore, the method of FIG. 8 also includes attaching (810) the sensor cap to the force-compliant element. Attaching (810) the sensor cap to the force-compliant element may be carried out by coupling the sensor cap (e.g., the sensor housing (112) of FIG. 1) to the force-compliant element (e.g., the force-compliant element (102) of FIG. 1).

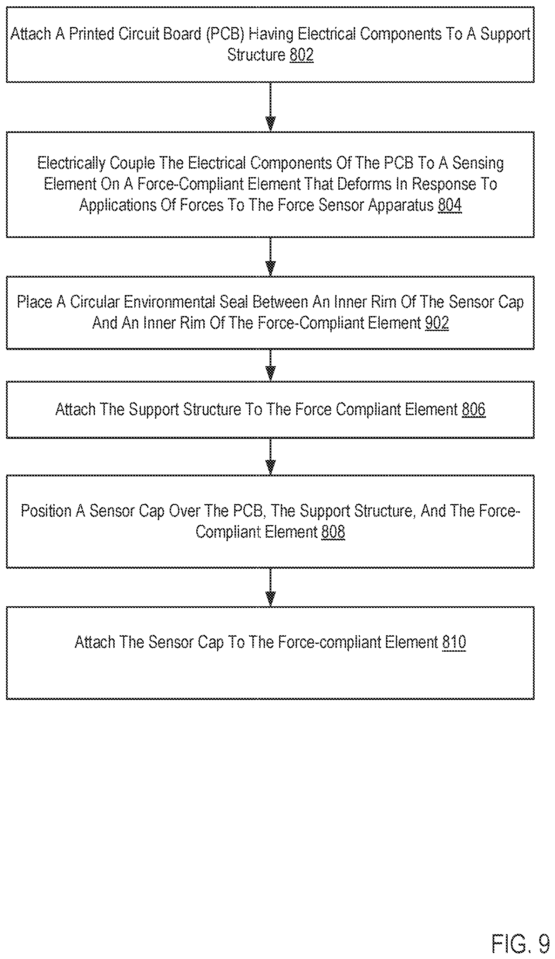

For further explanation, FIG. 9 sets forth a flowchart to illustrate another implementation of a method of assembling a force sensor apparatus according to embodiments of the present disclosure. The method of FIG. 9 is similar to the method in FIG. 8 in that the method of FIG. 9 also includes the elements of FIG. 8.

The method of FIG. 9 also includes placing (902) a circular environmental seal between an inner rim of the sensor cap and an inner rim of the force-compliant element. Placing (902) a circular environmental seal between an inner rim of the sensor cap and an inner rim of the force-compliant element may be carried out by positioning the environmental seal ring (e.g., the environmental seal ring (106) of FIG. 1) between the inner rim (e.g., the inner rim (180) of FIGs. 1-3) of the sensor cap (e.g., the sensor housing (112) of FIGs. 1-3) and the inner rim (e.g., the inner rim (160) of FIGs. 1-3) of the force compliant element (e.g., the force-compliant element (102) of FIGs. 1-3).

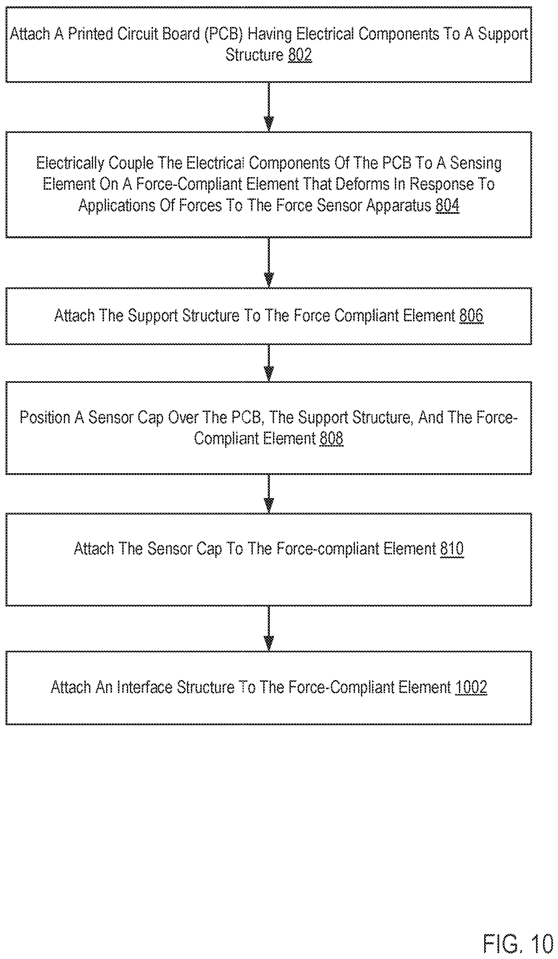

For further explanation, FIG. 10 sets forth a flowchart to illustrate another implementation of a method of assembling a force sensor apparatus according to embodiments of the present disclosure. The method of FIG. 10 is similar to the method in FIG. 8 in that the method of FIG. 10 also includes the elements of FIG. 8.

The method of FIG. 10 also includes attaching (1002) an interface structure to the force-compliant element. In a particular embodiment, the interface structure is attached to the force-compliant element before calibration of the force sensor apparatus. Attaching (1002) an interface structure to the force-compliant element may be carried out by coupling the interface structure (e.g., the interface structure (118) of FIG. 1) to the force-compliant element (e.g., the force-compliant element (102) of FIG. 1). For example, in a particular embodiment, the interface structure may be welded to the force-compliant element.

The flowchart and diagrams in the Figures illustrate the architecture, functionality, and operation of possible implementations of apparatus and methods according to various embodiments of the present disclosure. In some alternative implementations, the functions noted in the blocks or step in the method may occur out of the order noted in the figures. For example, two blocks shown in succession may, in fact, be performed substantially concurrently, or the blocks may sometimes be performed in the reverse order, depending on the functionality involved.

## Claims

1. A force sensor apparatus, comprising:
a force-compliant element (102) that deforms in response to applications of forces to the force sensor apparatus (100); and
a sensing element (104) coupled to an upper region (199) of the force-compliant element (102) and configured to generate one or more signals indicating an amount that the force-compliant element (102) deforms in response to the application of forces to the force sensor apparatus (100);
the force-compliant element (102) having a bottom region (650) that includes a force-receiving surface (105) and an outer region (680) surrounding the force-receiving surface (105),
**characterized in that** the outer region (680) is substantially level such that the area of the bottom region (650) surrounding the force-receiving surface (105) is absent any grooves into the force-compliant element (102).

2. The force sensor apparatus of claim 1, wherein the sensing element (104) includes a plurality of gauges (130).

3. The force sensor apparatus of claim 2, wherein the plurality of gauges (130) includes L-gauges that measure strain in both a radial direction and a tangential direction.

4. The force sensor apparatus of claim 2, wherein the gauges of the plurality of gauges (130) are evenly distributed around the circumference of the force-compliant element (102).

5. The force sensor apparatus of claim 1, wherein the bottom region (650) of the force-compliant element (102) includes a circular force interface (670) that defines a boundary of the force-receiving surface (105).

6. The force sensor apparatus of claim 1, wherein the force-compliant element (102) is ring-shaped.

7. The force sensor apparatus of claim 5, wherein the diameter (690) of the circular force interface (670) can be increased to make it suitable for higher forces or reduced to make it suitable for lower forces.

8. The force sensor apparatus of claim 1 further comprising:
an interface structure (118) that distributes a load to the force-compliant element (102), the interface structure (118) coupled to the force-compliant element (102).

9. The force sensor apparatus of claim 1 further comprising:
a printed circuit board (110) configured to receive the signal from the sensing element (102);
a support structure (108) having a surface on which the printed circuit board (110) is coupled; and
a sensor housing (112) that covers the printed circuit board (110).

10. The apparatus of claim 9 further comprising:
an electrical connector assembly (116) coupled to the PCB (110) and extended through an opening of the sensor housing (112); and
a seal (106) between the electrical connector assembly (116) and the sensor housing (112).

11. The apparatus of claim 1 wherein the outer region (650) being substantially level includes the outer region (112) having one or more small grooves into the force-compliant element (102).

12. A method of assembling a force sensor apparatus, the method comprising:
attaching (802) a printed circuit board (PCB) having electrical components to a support structure;
electrically coupling (804) the electrical components of the PCB to a sensing element on a force-compliant element that deforms in response to applications of forces to the force sensor apparatus, the sensing element configured to generate one or more signals indicating an amount that the force-compliant element deforms in response to the application of forces to the force sensor apparatus, the force-compliant element having a bottom region that includes an force-receiving surface and an outer region surrounding the force-receiving surface;
attaching (806) the support structure to the force-compliant element;
positioning a sensor cap over the PCB, the support structure, and the force-compliant element; and
attaching (810) the sensor cap to the force-compliant element,
**characterized in that** the outer region is substantially level such that the area of the bottom region surrounding the force-receiving surface is absent any grooves into the force-compliant element.

13. The method of claim 12 further comprising: placing (902) a circular environmental seal between an inner rim of the sensor cap and an inner rim of the force-compliant element.

## Patentansprüche

1. Kraftsensorvorrichtung, umfassend:
ein kraftnachgiebiges Element (102), das sich als Reaktion auf die Anwendung von Kräften auf die Kraftsensorvorrichtung (100) verformt; und
ein Erfassungselement (104), das mit einer oberen Zone (199) des kraftnachgiebigen Elements (102) gekoppelt und dazu konfiguriert ist, ein oder mehrere Signale zu erzeugen, die ein Ausmaß angeben, in dem sich das kraftnachgiebige Element (102) als Reaktion auf die Anwendung von Kräften auf die Kraftsensorvorrichtung (100) verformt;
wobei das kraftnachgiebige Element (102) eine Bodenzone (650), die eine kraftaufnehmende Oberfläche (105) umfasst, und eine die kraftaufnehmende Oberfläche (105) umgebende äußere Zone (680) aufweist,
**dadurch gekennzeichnet, dass** die äußere Zone (680) im Wesentlichen eben ist, so dass der Bereich der Bodenzone (650), der die kraftaufnehmende Oberfläche (105) umgibt, keine Rillen in das kraftnachgiebige Element (102) aufweist.

2. Kraftsensorvorrichtung nach Anspruch 1, wobei das Erfassungselement (104) eine Vielzahl von Messelementen (130) umfasst.

3. Kraftsensorvorrichtung nach Anspruch 2, wobei die Vielzahl von Messelementen (130) L-Messelemente umfasst, die die Dehnung sowohl in radialer Richtung als auch in tangentialer Richtung messen.

4. Kraftsensorvorrichtung nach Anspruch 2, wobei die Messelemente der Vielzahl von Messelementen (130) gleichmäßig um den Umfang des kraftnachgiebigen Elements (102) verteilt sind.

5. Kraftsensorvorrichtung nach Anspruch 1, wobei die Bodenzone (650) des kraftnachgiebigen Elements (102) eine kreisförmige Kraftschnittstelle (670) umfasst, die eine Begrenzung der kraftaufnehmenden Oberfläche (105) definiert.

6. Kraftsensorvorrichtung nach Anspruch 1, wobei das kraftnachgiebige Element (102) ringförmig ist.

7. Kraftsensorvorrichtung nach Anspruch 5, wobei der Durchmesser (690) der kreisförmigen Kraftschnittstelle (670) vergrößert werden kann, um sie für höhere Kräfte geeignet zu machen, oder verkleinert werden kann, um sie für geringere Kräfte geeignet zu machen.

8. Kraftsensorvorrichtung nach Anspruch 1, umfassend ferner:
eine Schnittstellenstruktur (118), die eine Last auf das kraftnachgiebige Element (102) verteilt, wobei die Schnittstellenstruktur (118) mit dem kraftnachgiebigen Element (102) gekoppelt ist.

9. Kraftsensorvorrichtung nach Anspruch 1, umfassend ferner:
eine Leiterplatte (110), die dazu konfiguriert ist, das Signal vom Erfassungselement (102) zu empfangen;
eine Stützstruktur (108) mit einer Oberfläche, an der die Leiterplatte (110) gekoppelt ist; und
ein Sensorgehäuse (112), das die Leiterplatte (110) abdeckt.

10. Vorrichtung nach Anspruch 9, umfassend ferner:
eine elektrische Verbinderbaugruppe (116), die mit der PCB (110) gekoppelt ist und sich durch eine Öffnung des Sensorgehäuses (112) erstreckt; und
eine Dichtung (106) zwischen der elektrischen Verbinderbaugruppe (116) und dem Sensorgehäuse (112).

11. Vorrichtung nach Anspruch 1, wobei die im Wesentlichen ebene äußere Zone (650) die äußere Zone (112) umfasst, die eine oder mehrere kleine Rillen in das kraftnachgiebige Element (102) aufweist.

12. Verfahren zum Zusammenbau einer Kraftsensorvorrichtung, wobei das Verfahren Folgendes umfasst:
Anbringen (802) einer Leiterplatte (PCB) mit elektrischen Komponenten an einer Stützstruktur;
elektrisches Koppeln (804) der elektrischen Komponenten der PCB mit einem Erfassungselement auf einem kraftnachgiebigen Element, das sich als Reaktion auf die Anwendung von Kräften auf die Kraftsensorvorrichtung verformt, wobei das Erfassungselement dazu konfiguriert ist, ein oder mehrere Signale zu erzeugen, die ein Ausmaß angeben, in dem sich das kraftnachgiebige Element als Reaktion auf die Anwendung von Kräften auf die Kraftsensorvorrichtung verformt, wobei das kraftnachgiebige Element eine Bodenzone, die eine kraftaufnehmende Oberfläche umfasst, und eine die kraftaufnehmende Oberfläche umgebende äußere Zone aufweist;
Anbringen (806) der Stützstruktur an dem kraftnachgiebigen Element;
Positionieren einer Sensorkappe über der PCB, der Stützstruktur und dem kraftnachgiebigen Element; und
Anbringen (810) der Sensorkappe an dem kraftnachgiebigen Element,
**dadurch gekennzeichnet, dass** die äußere Zone im Wesentlichen eben ist, so dass der Bereich der Bodenzone, der die kraftaufnehmende Oberfläche umgibt, keine Rillen in das kraftnachgiebige Element aufweist.

13. Verfahren nach Anspruch 12, umfassend ferner:
Anordnen (902) einer kreisförmigen Umgebungsdichtung zwischen einem Innenrand der Sensorkappe und einem Innenrand des kraftnachgiebigen Elements.

## Revendications

1. Appareil capteur de force, comprenant :
un élément compliant à la force (102) qui se déforme en réponse à des applications de forces sur l'appareil capteur de force (100) ; et
un élément de détection (104) couplé à une région supérieure (199) de l'élément compliant à la force (102) et configuré pour générer un ou plusieurs signaux indiquant une quantité selon laquelle l'élément compliant à la force (102) se déforme en réponse à l'application de forces sur l'appareil capteur de force (100) ;
l'élément compliant à la force (102) ayant une région inférieure (650) qui comporte une surface de réception de force (105) et une région externe (680) entourant la surface de réception de force (105),
**caractérisé en ce que** la région externe (680) est sensiblement plane de sorte que la zone de la région inférieure (650) entourant la surface de réception de force (105) est dépourvue de toute rainure dans l'élément compliant à la force (102).

2. Appareil capteur de force selon la revendication 1, dans lequel l'élément de détection (104) comporte une pluralité de jauges (130).

3. Appareil capteur de force selon la revendication 2, dans lequel la pluralité de jauges (130) comporte des jauges en L qui mesurent une déformation à la fois dans une direction radiale et dans une direction tangentielle.

4. Appareil capteur de force selon la revendication 2, dans lequel les jauges de la pluralité de jauges (130) sont réparties uniformément autour de la circonférence de l'élément compliant à la force (102).

5. Appareil capteur de force selon la revendication 1, dans lequel la région inférieure (650) de l'élément compliant à la force (102) comporte une interface de force circulaire (670) qui définit une limite de la surface de réception de force (105).

6. Appareil capteur de force selon la revendication 1, dans lequel l'élément compliant à la force (102) est en forme d'anneau.

7. Appareil capteur de force selon la revendication 5, dans lequel le diamètre (690) de l'interface de force circulaire (670) peut être augmenté pour le rendre adapté à des forces plus élevées ou réduit pour le rendre adapté à des forces plus faibles.

8. Appareil capteur de force selon la revendication 1 comprenant en outre :
une structure d'interface (118) qui répartit une charge sur l'élément compliant à la force (102), la structure d'interface (118) étant couplée à l'élément compliant à la force (102).

9. Appareil capteur de force selon la revendication 1 comprenant en outre :
une carte de circuit imprimé (110) configurée pour recevoir le signal provenant de l'élément de détection (102) ;
une structure de support (108) ayant une surface sur laquelle la carte de circuit imprimé (110) est couplée ; et
un boîtier de capteur (112) qui recouvre la carte de circuit imprimé (110).

10. Appareil selon la revendication 9 comprenant en outre :
un ensemble de connecteur électrique (116) couplé au PCB (110) et s'étendant à travers une ouverture du boîtier de capteur (112) ; et
un joint (106) entre l'ensemble de connecteur électrique (116) et le boîtier de capteur (112).

11. Appareil selon la revendication 1 dans lequel la région externe (650) étant sensiblement plane comprend la région externe (112) ayant une ou plusieurs petites rainures dans l'élément compliant à la force (102).

12. Procédé d'assemblage d'un appareil capteur de force, le procédé consistant à :
attacher (802) une carte de circuit imprimé (PCB) ayant des composants électriques à une structure de support ;
coupler électriquement (804) les composants électriques du PCB à un élément de détection sur un élément compliant à la force qui se déforme en réponse à des applications de forces sur l'appareil capteur de force, l'élément de détection étant configuré pour générer un ou plusieurs signaux indiquant une quantité selon laquelle l'élément compliant à la force se déforme en réponse à l'application de forces sur l'appareil capteur de force, l'élément compliant à la force ayant une région inférieure qui comprend une surface de réception de force et une région externe entourant la surface de réception de force ;
attacher (806) la structure de support à l'élément compliant à la force ;
positionner un capuchon de capteur au-dessus du PCB, de la structure de support, et de l'élément compliant à la force ; et
attacher (810) le capuchon de capteur à l'élément compliant à la force,
**caractérisé en ce que** la région externe est sensiblement plane de sorte que la zone de la région inférieure entourant la surface de réception de force est dépourvue de toute rainure dans l'élément compliant à la force.

13. Procédé selon la revendication 12 consistant en outre à :
placer (902) un joint environnemental circulaire entre un bord intérieur du capuchon de capteur et un bord intérieur de l'élément compliant à la force.
